# EUROPEAN PATENT SPECIFICATION

(11) **EP 4 315 494 B1**
(45) Date of publication and mention of the grant of the patent: **03.09.2025**
(21) Application number: 21948770.9
(22) Date of filing: 07.07.2021
(51) Int. Cl.: H01M 50/545, B21K 25/00, B23K 20/02

(54) **CYLINDRICAL BATTERY CELL, BATTERY AND METHOD FOR FORMING CYLINDRICAL BATTERY CELL**
ZYLINDRISCHE BATTERIEZELLE, BATTERIE UND VERFAHREN ZUR HERSTELLUNG EINER ZYLINDRISCHEN BATTERIEZELLE
ÉLÉMENT DE BATTERIE CYLINDRIQUE, BATTERIE ET PROCÉDÉ DE FORMATION D'ÉLÉMENT DE BATTERIE CYLINDRIQUE

(43) Date of publication of application: 07.02.2024
(73) Proprietor: Hefei Gotion High-Tech Power Energy Co., Ltd., Hefei, Anhui 230012 (CN)
(72) Inventor: DARBANDI, Azad, Hefei, Anhui 230012 (CN); SCHMIEG, Tobias, Hefei, Anhui 230012 (CN); CHENG, Qian, Hefei, Anhui 230012 (CN); LI, Chen, Hefei, Anhui 230012 (CN)
(74) Representative: Studio Torta S.p.A.
(86) International application number: PCT/CN2021/104895
(87) International publication number: WO 2023/279272

(56) References cited:
- WO-A1-2023/272427
- CN-A- 101 609 903
- CN-A- 111 403 653
- CN-A- 112 531 295
- CN-U- 213 401 445
- JP-A- H10 112 330

## Description

### TECHNICAL FIELD

The present invention generally relates to the field of battery, and more particularly, to a cylindrical battery cell, a battery and a method for forming cylindrical battery cell.

### BACKGROUND

A battery (such as an automotive battery) in general includes a plurality of battery cell. As a kind of battery cell, a cylindrical battery cell is used recently. For example, formfactors of the cylindrical battery cell may be from 2170 (diameter is 21mm and height is 70mm) to 50120 (diameter is 50mm and height is 120mm), and the cylindrical battery cell may at least include a cell housing and a jellyroll structure.

In general, the cylindrical battery cell needs to have a special current path within a cell design in order to ensure enough ampacity. Hence a resistive spot welding of an anode current collector to a steel cell housing is not applicable for larger cell sizes (e.g. 4680 or larger). In some schemes, it is suggested to join a copper current collector and a steel cell housing by long welding seam created by a laser beam or an ultrasonic.

A cylindrical battery cell, battery and method for forming cylindrical battery cell is disclosed in WO2023/272427A1. This document relates to Art 54(3) EPC, hence is not relevant to the question of inventive step.

### SUMMARY

However, the inventors found that in some existing schemes, there are several difficulties, challenges and risks in welding copper to steel. For example, copper and steel have quite different melting points (1085°C vs. 1450°C). Almost 400°C difference in melting point makes a proper adjustment of laser beam intensity rather challenging. Furthermore, joining/welding can be only achieved, in case a laser beam hits a copper surface. This means, the joining of a cell housing and a copper current collector cannot be performed from outside of the cell housing. Furthermore, welding of Cu and Nickel-Plated Steel can affect Nickel coating, which potentially introduce risk of corrosion of cell housing, which in terms may potentially lead to cell internal short circuit by transportation of corrosion products.

In order to solve at least part of the above problems, methods and devices are provided in the present invention. Features and advantages of embodiments of the present invention will also be understood from the following description of specific embodiments when read in conjunction with the accompanying drawings, which illustrate, by way of example, the principles of embodiments of the present invention.

In general, the present invention provides a cylindrical battery cell, a battery and a method for forming cylindrical battery cell. It is expected to join/weld the cell housing with the jellyroll structure by using a laser from outside of the cell housing, while risk of corrosion of cell housing is not introduced.

In a first aspect, a cylindrical battery cell according to claim 1 is provided.

In some embodiments, the copper plate is welded with the jellyroll structure by using a laser from outside of the cell housing.

In some embodiments, a thickness of the copper plate is determined according to a thickness of a flattened tab of the jellyroll structure on a bottom side of the jellyroll structure.

In some embodiments, one or more flattened tabs of the jellyroll structure are welded with the copper plate by using a laser after the jellyroll structure is inserted into the cell housing.

In some embodiments, one or more flattened tabs of the jellyroll structure are pre-welded with a copper current collector on a bottom side of the jellyroll structure, and the copper plate is welded with the copper current collector by using a laser after the jellyroll structure is inserted into the cell housing.

In some embodiments, the cell housing is made up of steel, and the bi-metal plate is formed by using a forging process on the bottom side of the cell housing.

In a second aspect, a method for forming cylindrical battery cell according to claim 6 is provided.

In a third aspect, a battery according to claim 12 is provided.

According to various embodiments of the present invention, a copper plate is forged with the cell housing to form a bi-metal plate on the bottom side of the cell housing, and the copper plate is welded with the jellyroll structure. Therefore, joining/welding the cell housing with the jellyroll structure is achieved by using a laser from outside of the cell housing, while risk of corrosion of cell housing is not introduced.

### BRIEF DESCRIPTION OF THE DRAWINGS

The above and other aspects, features, and benefits of various embodiments of the invention will become more fully apparent, by way of example, from the following detailed description with reference to the accompanying drawings, in which like reference numerals or letters are used to designate like or equivalent elements. The drawings are illustrated for facilitating better understanding of the embodiments of the invention and not necessarily drawn to scale, in which:
Fig. 1 is a diagram which shows a cylindrical battery cell in accordance with an embodiment of the present invention;
Fig. 2 is a diagram which shows a section view of the cylindrical battery cell in accordance with an embodiment of the present invention;
Fig. 3 is a diagram which shows a method for forming cylindrical battery cell in accordance with an embodiment of the present invention;
Fig. 4 is a diagram which shows a cell housing with a copper plate in accordance with an embodiment of the present invention;
Fig. 5 is a diagram which shows a cell housing forging a copper plate in accordance with an embodiment of the present invention;
Fig. 6 is another diagram which shows a cell housing forging a copper plate in accordance with an embodiment of the present invention;
Fig. 7 is a diagram which shows a cell housing and a jellyroll structure in accordance with an embodiment of the present invention;
Fig. 8 is another diagram which shows a cell housing and a jellyroll structure in accordance with an embodiment of the present invention;
Fig. 9 is a diagram which shows a battery in accordance with an embodiment of the present invention.

### DETAILED DESCRIPTION

The present invention will now be described with reference to several example embodiments. It should be understood that these embodiments are discussed only for the purpose of enabling those skilled persons in the art to better understand and thus implement the present invention, rather than suggesting any limitations on the scope of the present invention.

It should be understood that when an element is referred to as being "connected" or "coupled" or "contacted" to another element, it may be directly connected or coupled or contacted to the other element or intervening elements may be present. In contrast, when an element is referred to as being "directly connected" or "directly coupled" or "directly contacted" to another element, there are no intervening elements present. Other words used to describe the relationship between elements should be interpreted in a like fashion (e.g., "between" versus "directly between", "adjacent" versus "directly adjacent", etc.).

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof.

The term "based on" is to be read as "based at least in part on". The term "cover" is to be read as "at least in part cover". The term "one embodiment" and "an embodiment" are to be read as "at least one embodiment". The term "another embodiment" is to be read as "at least one other embodiment". Other definitions, explicit and implicit, may be included below.

In this invention, unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

### A first aspect of embodiments

A cylindrical battery cell is provided in the embodiments.

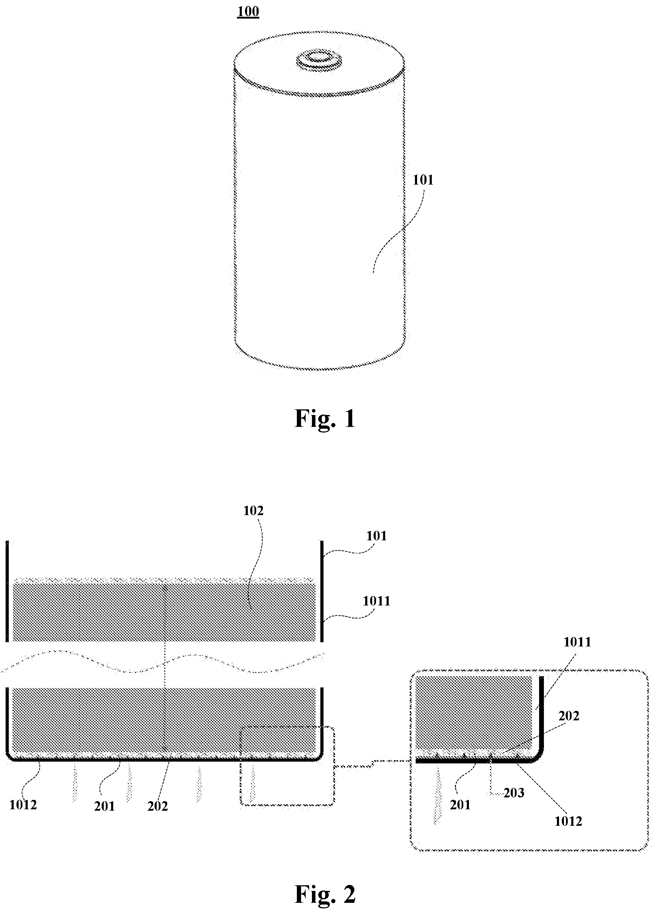

Fig. 1 is a diagram which shows a cylindrical battery cell 100 in accordance with an embodiment of the present invention. Fig. 2 is a diagram which shows a section view of the cylindrical battery cell 100 in accordance with an embodiment of the present invention.

As shown in Fig. 1 and Fig. 2, a cylindrical battery cell 100 at least includes: a cell housing 101 and a jellyroll structure 102. The cell housing 101 have a cylindrical lateral portion 1011 and a bottom portion 1012.

The jellyroll structure 102 is arranged inside the cell housing 101. For example, the jellyroll structure 102 includes a rolled anode foil, a rolled cathode foil and a rolled separator between the rolled anode foil and the rolled cathode foil. As for the detail of the jellyroll structure 102, please refer to relevant art.

As shown in Fig. 2, a copper plate 201 is forged with the bottom portion 1012 inside of the cell housing 101 to form a bi-metal plate on a bottom side of the cell housing 101, and the copper plate 201 is welded with the jellyroll structure 102.

For example, the bi-metal plate is formed by the copper plate 201 and the bottom portion 1012 of the cell housing 101. The bi-metal plate is a cu-steel plate while the copper plate 201 is arranged inside of the cell housing 101.

It should be appreciated that some components or elements are illustrated only as examples in Fig. 1 and Fig. 2. However, it is not limited thereto, for example, connections or positions of the components or elements may be adjusted, and/or, some components or elements may be omitted. For example, the cylindrical battery cell 100 may include a cap component, and it is not limited thereto.

In this invention, the bi-metal plate is formed at the bottom side of the cell housing 101, and the copper plate 201 is welded with the jellyroll structure 102 by using a laser from outside of the cell housing 101. Therefore, joining/welding the cell housing with the jellyroll structure is achieved by using a laser from outside of the cell housing, while risk of corrosion of cell housing is not introduced.

In this invention, a laser is used to weld the copper plate 201 inside of the cell housing 101 with the jellyroll structure 102, but it is not limited thereto. For example, other ways such as an ultrasonic may be used in the welding process.

In some embodiments, the copper plate 201 is welded with the jellyroll structure 101 by using a laser from outside of the cell housing 101. For example, as shown in Fig. 2, some dots 203 are used to demonstrate laser welding footprints.

In some embodiments, a thickness of the copper plate is determined according to a thickness of a flattened tab of the jellyroll structure on a bottom side of the jellyroll structure. For example, the shape/thickness of copper plate 201 can be adjusted by tooling on demand according to requirement.

In some embodiments, one or more flattened tabs of the jellyroll structure are welded with the copper plate by using a laser after the jellyroll structure is inserted into the cell housing. For example, there is not a pre-welded copper current collector.

As shown in Fig. 2, there are one or more flattened tabs 202 in the jellyroll structure 102 one the bottom side of the jellyroll structure 102. The flattened tabs 202 of the jellyroll structure 102 are welded with the copper plate 201 by using a laser after the jellyroll structure 102 is inserted into the cell housing 101.

Therefore, the copper plate (Cu) inside of the cell housing will be laser welded to the tabs (Cu) afterwards, such that there is not difference in melting point when welding. Furthermore, a copper current collector is intendedly not considered in this example. The copper plate inside of the cell housing will be directly laser welded to the flattened copper tabs of the jellyroll structure. Consequently, a manufacturing process, welding a current collector (Cu) to tabs is skipped, which reduces manufacturing costs.

In some embodiments, a thickness (D1) of the copper plate 201 is equal to a thickness (D2) of the cell housing 101, or is smaller than a predetermined threshold (T1). For example, D1 = D2, or D1 < T1, and it is not limited thereto.

In some embodiments, one or more flattened tabs of the jellyroll structure are pre-welded with a copper current collector on a bottom side of the jellyroll structure, and the copper plate is welded with the copper current collector by using a laser after the jellyroll structure is inserted into the cell housing.

For example, the flattened tabs 202 of the jellyroll structure 102 are pre-welded with a copper current collector on the bottom side of the jellyroll structure 102, and the copper plate 201 is welded with the copper current collector by using a laser after the jellyroll structure 102 is inserted into the cell housing 101.

Therefore, the copper current collector is pre-welded to the flattened copper tabs. The copper plate (Cu) inside of the cell housing will be laser welded to the copper current collector (Cu) afterwards, such that there is not difference in melting point when welding.

In some embodiments, the cell housing is made up of steel, and the bi-metal plate is formed by a forging process on the bottom side of the cell housing. However, it is not limited thereto.

In this invention, copper is configured inside of a cell housing by a bi-metal forging process. For example, a copper plate is forged on the bottom side of the cell housing. The shape and thickness of the copper plate can be adjusted by tooling. Different shape and thickness of the copper plate may provide and enhance variety of cell properties, regarding thermal management and cooling system.

After inserting of the jellyroll structure into the cell housing, cell bottom (copper plate) can be penetration laser welded directly to the jellyroll structure, from outside of the cell housing. For example, the jellyroll structure can be pre-welded its own current collector (copper disk). For another example, it is possible to laser weld the copper plate directly to flattered tabs.

In this invention, joining of a copper plate to a steel cell housing by enabling laser welding from outside of the cell housing can be achieved, and the risk of corrosion within cell can be eliminated. Furthermore, the technique solution of this invention can maximize a space usage at the bottom side of the cell housing (higher volumetric filling ratio, higher energy content per cell, lower cost per cell mechanic).

In addition, the technical solution enhances substantially a thermal conduction path at the cell bottom. Concurrently, a high in-plane thermal conduction of jellyroll structure (in vertical axis) is achieved, this enables implementation of bottom cooling at module/pack level.

For example, implementation of bottom cooling increases volumetric filling ratio at module/pack level by minimize 5%. Implementation of bottom cooling resolves many technical challenges in integration and reduces manufacturing costs.

It is to be understood that, the above examples or embodiments are discussed for illustration, rather than limitation. Those skilled in the art would appreciate that there may be many other embodiments or examples within the scope of the appended claims.

It can be seen from the above embodiments, a copper plate is forged with the cell housing to form a bi-metal plate on the bottom side of the cell housing, and the copper plate is welded with the jellyroll structure. Therefore, joining/welding the cell housing with the jellyroll structure is achieved by using a laser from outside of the cell housing, while risk of corrosion of cell housing is not introduced.

### A second aspect of embodiments

A method for forming cylindrical battery cell is provided in the embodiments. The corresponding devices are illustrated in the first aspect of embodiments, and the same contents as those in the first aspect of embodiments are omitted.

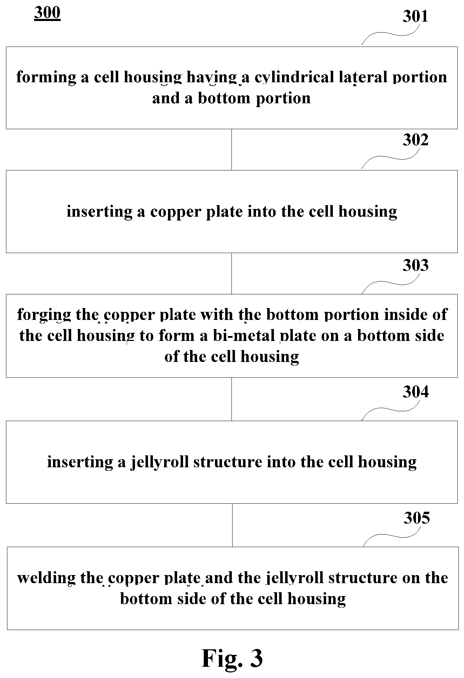

Fig. 3 is a diagram which shows a method for forming cylindrical battery cell in accordance with an embodiment of the present invention. As shown in Fig. 3, a method 300 for forming cylindrical battery cell includes:
301, forming a cell housing having a cylindrical lateral portion and a bottom portion;
302, inserting a copper plate into the cell housing;

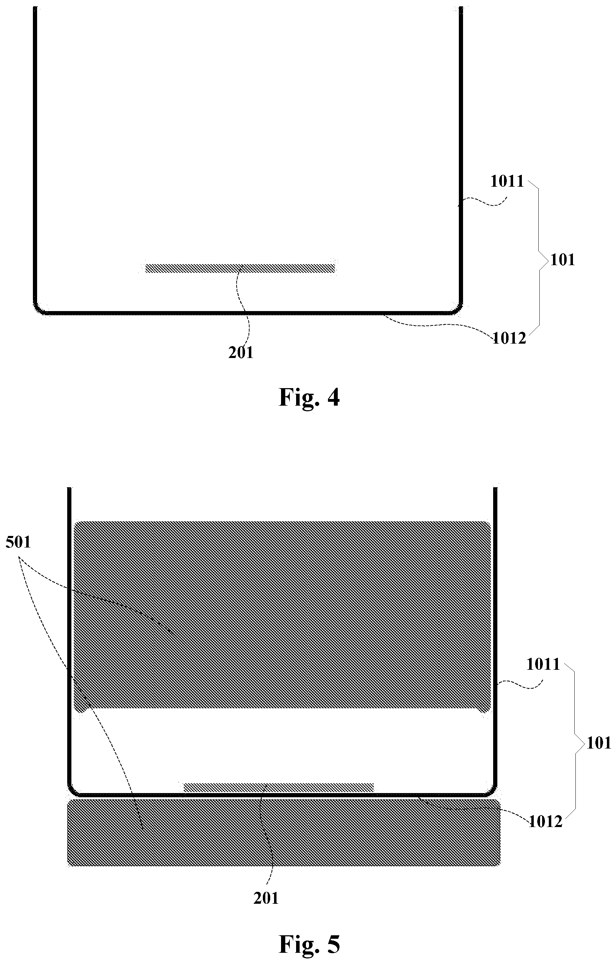

Fig. 4 is a diagram which shows a cell housing with a copper plate in accordance with an embodiment of the present invention. As shown in Fig. 4, a copper plate 201 is inserted into the cell housing 101.

As shown in Fig. 3, a method 300 for forming cylindrical battery cell includes:
303, forging the copper plate with the bottom portion inside of the cell housing to form a bi-metal plate on a bottom side of the cell housing;

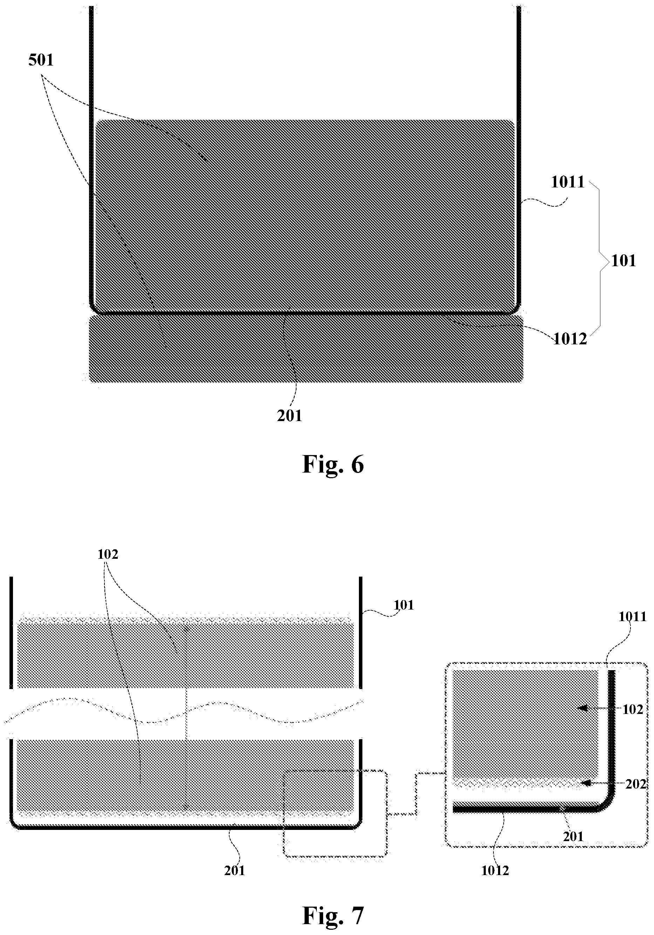

Fig. 5 is a diagram which shows a cell housing forging a copper plate in accordance with an embodiment of the present invention; Fig. 6 is another diagram which shows a cell housing forging a copper plate in accordance with an embodiment of the present invention. As shown in Fig. 5, a forging machine 501 is introduced. As shown in Fig. 6, a forging process is executed and a bi-metal plate is formed.

As shown in Fig. 3, a method 300 for forming cylindrical battery cell includes:
304, inserting a jellyroll structure into the cell housing.

Fig. 7 is a diagram which shows a cell housing and a jellyroll structure in accordance with an embodiment of the present invention. As shown in Fig. 7, the jellyroll structure 102 is inserted into the cell housing 101.

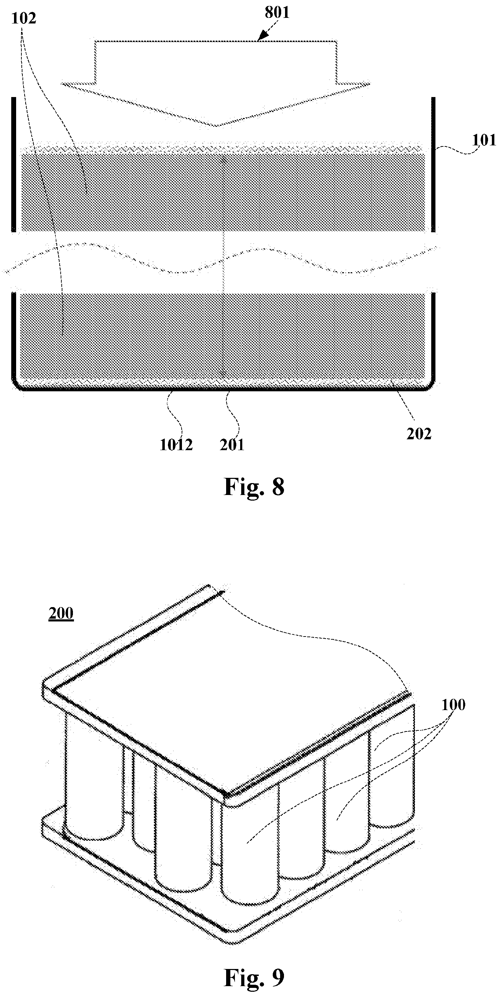

Fig. 8 is another diagram which shows a cell housing and a jellyroll structure in accordance with an embodiment of the present invention. As shown in Fig. 8, after the jellyroll structure 102 is inserted into the cell housing 101, a force 801 is applied to insure a gap-free interface between the bi-metal plate (the bottom portion 1012 and the copper plate 201) of the cell housing 101 and the tabs 202 of the jellyroll structure 102.

As shown in Fig. 3, a method 300 for forming cylindrical battery cell includes:
305, welding the copper plate and the jellyroll structure on the bottom side of the cell housing.

As shown in Fig. 2, the copper plate 201 inside of the cell housing 101 is weld (some dots in Fig. 2 are used to demonstrate laser welding footprints) with the jellyroll structure 102 by using a laser from outside of the cell housing.

It should be appreciated that Fig. 3 is only an example of the invention, but it is not limited thereto. For example, the order of operations at blocks or steps may be adjusted, and/or, some blocks or steps may be omitted. Moreover, some blocks or steps not shown in Fig. 3 may be added.

Furthermore, some components or elements are illustrated only as examples in Fig. 4 to Fig. 8. However, it is not limited thereto, for example, connections or positions of the components or elements may be adjusted, and/or, some components or elements may be omitted.

In some embodiments, the copper plate is welded with the jellyroll structure by using a laser from outside of the cell housing.

In some embodiments, a thickness of the copper plate is determined according to a thickness of a flattened tab of the jellyroll structure on a bottom side of the jellyroll structure.

In some embodiments, one or more flattened tabs of the jellyroll structure are welded with the copper plate by using a laser after the jellyroll structure is inserted into the cell housing.

In some embodiments, one or more flattened tabs of the jellyroll structure are pre-welded with a copper current collector on a bottom side of the jellyroll structure, and the copper plate is welded with the copper current collector by using a laser after the jellyroll structure is inserted into the cell housing.

In some embodiments, the cell housing is made up of steel, and the bi-metal plate is formed by using a forging process on the bottom side of the cell housing.

It can be seen from the above embodiments, a copper plate is forged with the cell housing to form a bi-metal plate on the bottom side of the cell housing, and the copper plate is welded with the jellyroll structure. Therefore, joining/welding the cell housing with the jellyroll structure is achieved by using a laser from outside of the cell housing, while risk of corrosion of cell housing is not introduced.

### A third aspect of embodiments

A battery is provided in the embodiments. The corresponding devices and the method are illustrated in the first and second aspects of embodiments, and the same contents as those in the first and second aspects of embodiments are omitted.

In some embodiments, the battery includes a plurality of the cylindrical battery cell. The cylindrical battery cell is illustrated according to the first aspects of embodiments.

Fig. 9 is a diagram which shows a battery 200 in accordance with an embodiment of the present invention. As shown in Fig. 9, the battery 200 may include a plurality of the cylindrical battery cell 100.

It should be appreciated that Fig. 9 is only an example of the invention, but it is not limited thereto. For example, some components or elements are illustrated only as examples in Fig. 9. However, it is not limited thereto, for example, connections or positions of the components or elements may be adjusted, and/or, some components or elements may be omitted.

Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and integrated circuits (ICs) with minimal experimentation.

Generally, various embodiments of the present invention may be implemented in hardware or special purpose circuits, software, logic or any combination thereof. Some aspects may be implemented in hardware, while other aspects may be implemented in firmware or software which may be executed by a controller, microprocessor or other computing device.

While various aspects of embodiments of the present invention are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous.

Likewise, while several specific implementation details are contained in the above discussions, these should not be construed as limitations on the scope of the present invention, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present invention has been described in language specific to structural features and/or methodological acts, it is to be understood that the present invention defined in the appended claims is not necessarily limited to the specific features or acts described above. Rather, the specific features and acts described above are disclosed as example forms of implementing the claims.

## Claims

1. A cylindrical battery cell, at least comprising:
a cell housing (101) having a cylindrical lateral portion and a bottom portion, said bottom portion being provided with no opening; and
a jellyroll structure (102) which is arranged inside the cell housing (101);
**characterized in that** said cylindrical battery cell comprises << forging a copper plate (201) with the bottom portion, inside of the cell housing (101) >> a bi-metal plate on a bottom side of the cell housing (101) formed by << - >> ; and **in that** said copper plate (201) is welded with the jellyroll structure (102).

2. The cylindrical battery cell according to claim 1, wherein the copper plate (201) is welded with the jellyroll structure (102) as a result of using a laser from outside of the cell housing (101).

3. The cylindrical battery cell according to claim 1, wherein one or more flattened tabs of the jellyroll structure (102) are welded with the copper plate (201) as a result of using a laser after the jellyroll structure (102) is inserted into the cell housing (101).

4. The cylindrical battery cell according to claim 1, wherein one or more flattened tabs of the jellyroll structure (102) are welded with a copper current collector, which is welded with the copper plate (201), as a result of pre-welding said one or more tabs of the jelly-roll structure (102) with a copper current collector on a bottom side of the jellyroll structure (102), and welding the copper plate (201) with the copper current collector by using a laser after the jellyroll structure (102) is inserted into the cell housing (101).

5. The cylindrical battery cell according to claim 1, wherein the cell housing (101) is made up of steel, and the bi-metal plate is formed by using said forging process on the bottom side of the cell housing (101).

6. A method for forming cylindrical battery cell, comprising:
forming a cell housing (101) having a cylindrical lateral portion and a bottom portion, said bottom portion being provided with no opening inserting a copper plate (201) into the cell housing (101);
forging the copper plate (201) with the bottom portion inside of the cell housing (101) to form a bi-metal plate on a bottom side of the cell housing (101);
inserting a jellyroll structure (102) into the cell housing (101); and
welding the copper plate (201) and the jellyroll structure (102) on the bottom side of the cell housing (101).

7. The method according to claim 6, wherein the copper plate (201) is welded with the jellyroll structure (102) by using a laser from outside of the cell housing (101).

8. The method according to claim6, wherein a thickness of the copper plate (201) is determined according to a thickness of a flattened tab of the jellyroll structure (102) on a bottom side of the jellyroll structure (102).

9. The method according to claim 6, wherein one or more flattened tabs of the jellyroll structure (102) are welded with the copper plate (201) by using a laser after the jellyroll structure (102) is inserted into the cell housing (101).

10. The method according to claim 6, wherein one or more flattened tabs of the jellyroll structure (102) are pre-welded with a copper current collector on a bottom side of the jellyroll structure (102), and the copper plate (201) is welded with the copper current collector by using a laser after the jellyroll structure (102) is inserted into the cell housing (101).

11. The method according to claim 6, wherein the cell housing (101) is made up of steel, and the bi-metal plate is formed by using a forging process on the bottom side of the cell housing (101).

12. A battery, comprising a plurality of cylindrical battery cells according to any one of claims 1-5.

## Patentansprüche

1. Zylindrische Batteriezelle, die mindestens Folgendes umfasst:
ein Zellgehäuse (101) mit einem zylindrischen Seitenabschnitt und einem Bodenabschnitt, wobei der Bodenabschnitt keine Öffnung aufweist; und
eine Jelly-Roll-Struktur (102), die innerhalb des Zellgehäuses (101) angeordnet ist;
**dadurch gekennzeichnet, dass** die zylindrische Batteriezelle eine Bimetallplatte auf einer Unterseite des Zellgehäuses (101) umfasst, die durch Schmieden einer Kupferplatte (201) mit dem Bodenabschnitt innerhalb des Zellgehäuses (101) gebildet wird; und **dadurch, dass** die Kupferplatte (201) mit der Jelly-Roll-Struktur (102) verschweißt ist.

2. Zylindrische Batteriezelle nach Anspruch 1, wobei die Kupferplatte (201) durch Verwendung eines Lasers von außerhalb des Zellgehäuses (101) mit der Jelly-Roll-Struktur (102) verschweißt wird.

3. Zylindrische Batteriezelle nach Anspruch 1, wobei eine oder mehrere abgeflachte Laschen der Jelly-Roll-Struktur (102) durch Verwendung eines Lasers mit der Kupferplatte (201) verschweißt werden, nachdem die Jelly-Roll-Struktur (102) in das Zellgehäuse (101) eingesetzt wurde.

4. Zylindrische Batteriezelle nach Anspruch 1, wobei eine oder mehrere abgeflachte Laschen der Jelly-Roll-Struktur (102) mit einem Kupferstromkollektor verschweißt sind, der wiederum mit der Kupferplatte (201) verschweißt ist, indem die eine oder mehreren Laschen der Jelly-Roll-Struktur (102) mit einem Kupferstromkollektor auf einer Unterseite der Jelly-Roll-Struktur (102) vorverschweißt werden und die Kupferplatte (201) mit dem Kupferstromkollektor unter Verwendung eines Lasers verschweißt wird, nachdem die Jelly-Roll-Struktur (102) in das Zellgehäuse (101) eingesetzt wurde.

5. Zylindrische Batteriezelle nach Anspruch 1, wobei das Zellgehäuse (101) aus Stahl besteht und die Bimetallplatte durch Verwendung des Schmiedeprozesses auf der Unterseite des Zellgehäuses (101) gebildet wird.

6. Verfahren zum Bilden einer zylindrischen Batteriezelle, umfassend:
Bilden eines Zellgehäuses (101) mit einem zylindrischen Seitenabschnitt und einem Bodenabschnitt, wobei der Bodenabschnitt keine Öffnung aufweist;
Einsetzen einer Kupferplatte (201) in das Zellgehäuse (101);
Schmieden der Kupferplatte (201) mit dem Bodenabschnitt innerhalb des Zellgehäuses (101), um eine Bimetallplatte auf einer Unterseite des Zellgehäuses (101) zu bilden;
Einsetzen einer Jelly-Roll-Struktur (102) in das Zellgehäuse (101); und
Aufschweißen der Kupferplatte (201) und der Jelly-Roll-Struktur (102) auf die Unterseite des Zellgehäuses (101).

7. Verfahren nach Anspruch 6, wobei die Kupferplatte (201) mit der Jelly-Roll-Struktur (102) durch Verwendung eines Lasers von außerhalb des Zellgehäuses (101) verschweißt wird.

8. Verfahren nach Anspruch 6, wobei eine Dicke der Kupferplatte (201) entsprechend einer Dicke einer abgeflachten Lasche der Jelly-Roll-Struktur (102) auf einer Unterseite der Jelly-Roll-Struktur (102) bestimmt wird.

9. Verfahren nach Anspruch 6, wobei eine oder mehrere abgeflachte Laschen der Jelly-Roll-Struktur (102) unter Verwendung eines Lasers mit der Kupferplatte (201) verschweißt werden, nachdem die Jelly-Roll-Struktur (102) in das Zellgehäuse (101) eingesetzt wurde.

10. Verfahren nach Anspruch 6, wobei eine oder mehrere abgeflachte Laschen der Jelly-Roll-Struktur (102) mit einem Kupferstromkollektor auf einer Unterseite der Jelly-Roll-Struktur (102) vorverschweißt werden und die Kupferplatte (201) unter Verwendung eines Lasers mit dem Kupferstromkollektor verschweißt wird, nachdem die Jelly-Roll-Struktur (102) in das Zellgehäuse (101) eingesetzt wurde.

11. Verfahren nach Anspruch 6, wobei das Zellgehäuse (101) aus Stahl besteht und die Bimetallplatte durch einen Schmiedeprozess auf der Unterseite des Zellgehäuses (101) gebildet wird.

12. Batterie, die eine Vielzahl zylindrischer Batteriezellen nach einem der Ansprüche 1 bis 5 umfasst.

## Revendications

1. Cellule de batterie cylindrique, comprenant au moins :
un boîtier cellulaire (101) ayant une partie latérale cylindrique et une partie inférieure, ladite partie inférieure étant dépourvue d'ouverture ; et
une structure à enroulement (102) qui est disposée à l'intérieur d'un boîtier cellulaire (101) ;
**caractérisée en ce que** ladite cellule de batterie cylindrique comprend une plaque bimétallique sur une face inférieure du boîtier cellulaire (101), formée par le forgeage d'une plaque de cuivre (201) avec la partie inférieure, à l'intérieur du boîtier cellulaire (101) ; et **en ce que** ladite plaque de cuivre (201) est soudée à la structure à enroulement (102).

2. Cellule de batterie cylindrique selon la revendication 1, dans laquelle la plaque de cuivre (201) est soudée à la structure en rouleaux (102) à la suite de l'utilisation d'un laser depuis l'extérieur du boîtier cellulaire (101).

3. Cellule de batterie cylindrique selon la revendication 1, dans laquelle une ou plusieurs languettes aplaties de la structure à enroulement (102) sont soudées avec la plaque de cuivre (201) à la suite de l'utilisation d'un laser après l'insertion de la structure à enroulement (102) dans le boîtier cellulaire (101).

4. Cellule de batterie cylindrique selon la revendication 1, dans laquelle une ou plusieurs languettes aplaties de la structure à enroulement (102) sont soudées avec un collecteur de courant en cuivre, qui est soudé avec la plaque de cuivre (201), suite au pré-soudage desdites une ou plusieurs languettes de la structure à enroulement (102) avec un collecteur de courant en cuivre sur un côté inférieur de la structure à enroulement (102), et au soudage de la plaque de cuivre (201) avec le collecteur de courant en cuivre à l'aide d'un laser après l'insertion de la structure à enroulement (102) dans le boîtier cellulaire (101).

5. Cellule de batterie cylindrique selon la revendication 1, dans laquelle le boîtier cellulaire (101) est en acier, et la plaque bimétallique est formée à l'aide dudit processus de forgeage sur le côté inférieur du boîtier cellulaire (101).

6. Procédé de formation d'une cellule de batterie cylindrique, comprenant :
la formation d'un boîtier cellulaire (101) ayant une partie latérale cylindrique et une partie inférieure, ladite partie inférieure étant dépourvue d'une ouverture ;
l'insertion d'une plaque de cuivre (201) dans le boîtier cellulaire (101) ;
le forgeage de la plaque de cuivre (201) avec la partie inférieure à l'intérieur du boîtier cellulaire (101) pour former une plaque bimétallique sur une face inférieure du boîtier cellulaire (101) ;
l'insertion d'une structure à enroulement (102) dans le boîtier cellulaire (101) ; et
le soudage de la plaque de cuivre (201) et la structure à enroulement (102) sur la face inférieure du boîtier cellulaire (101).

7. Procédé selon la revendication 6, dans lequel la plaque de cuivre (201) est soudée à la structure à enroulement (102) à l'aide d'un laser depuis l'extérieur du boîtier cellulaire (101).

8. Procédé selon la revendication 6, dans lequel un épaisseur de la plaque de cuivre (201) est déterminée en fonction de l'épaisseur d'une languette aplatie de la structure à enroulement (102) sur une face inférieure de la structure à enroulement (102).

9. Procédé selon la revendication 6, dans lequel une ou plusieurs languettes aplaties de la structure à enroulement (102) sont soudées à la plaque de cuivre (201) à l'aide d'un laser après l'insertion de la structure à enroulement (102) dans le boîtier cellulaire (101).

10. Procédé selon la revendication 6, dans lequel une ou plusieurs languettes aplaties de la structure à enroulement (102) sont pré-soudées avec un collecteur de courant en cuivre sur une face inférieure de la structure à enroulement (102), et la plaque de cuivre (201) est soudée avec le collecteur de courant en cuivre à l'aide d'un laser après que la structure à enroulement (102) a été insérée dans le boîtier cellulaire (101).

11. Procédé selon la revendication 6, dans lequel le boîtier cellulaire (101) est en acier et la plaque bimétallique est formée par un procédé de forgeage sur la face inférieure du boîtier cellulaire (101).

12. Batterie comprenant une pluralité de cellules de batterie cylindriques selon l'une quelconque des revendications 1 à 5.
